# EUROPÄISCHE PATENTSCHRIFT

(11) **EP 2 053 346 B1**
(45) Veröffentlichungstag und Bekanntmachung des Hinweises auf die Patenterteilung: **21.08.2013**
(21) Anmeldenummer: 08018652.1
(22) Anmeldetag: 24.10.2008
(51) Int. Cl.: G01B 7/14, G01P 3/49, G01D 5/20, G01H 1/00

(54) **Wirbelstromsensoranordnung und Verfahren zur Schwingungs-, Abstands- und Drehzahlmessung an rotierenden Bauelementen**
Eddy current sensor assembly and method for measuring rotation, separation and rotation speed of rotating construction elements
Agencement de capteur de courant de Foucault et procédé d'intervalle d'oscillations et de mesure de vitesse de rotation sur des composants rotatifs

(30) Priorität: 25.10.2007 DE 102007051161
(43) Veröffentlichungstag der Anmeldung: 29.04.2009
(73) Patentinhaber: Konrad Mess- und Regeltechnik GmbH, 89355 Gundremmingen (DE)
(72) Erfinder: Behnke, Heinz, 34253 Lohfelden (DE); Brassel, Bernd, 34286 Spangenberg (DE); Hofer, Martin, 89355 Gundremmingen (DE); Nieswand, Karl-Heinz, 57627 Hachenburg (DE)
(74) Vertreter: Tiesmeyer, Johannes

(56) Entgegenhaltungen:
- DE-A1-102005 007 718
- DE-T2- 69 512 657
- US-A- 3 609 527
- US-A1- 2003 222 640
- US-B2- 7 170 284

## Beschreibung

Die Erfindung betrifft eine Wirbelstromsensoranordnung zur Schwingungs-, Abstands- und/oder Drehzahlmessung an rotierenden Bauelementen, insbesondere Turbinenwellen, umfassend mindestens zwei Einzelsensoren, sowie ein Verfahren zur Schwingungs-, Abstands- und Drehzahlmessung an rotierenden Bauelementen, insbesondere Turbinenwellen, unter Verwendung einer entsprechenden Wirbelstromsensoranordnung.

Wirbelstromsensoren werden in vielfältiger Weise zur Überwachung und Bestimmung des Betriebszustands rotierender Bauelemente eingesetzt. Insbesondere von Bedeutung ist dabei die Überwachung der Wellen von Kraftwerksturbinen, die in der Regel sehr große rotierende Massen darstellen und u. U. mit hohen Drehzahlen betrieben werden. Im Betrieb können diese Wellen aufgrund einer Vielzahl von Ursachen in Schwingung geraten. Werden diese Schwingungen zu groß, kann der Betrieb der Turbine beeinträchtigt werden und es können Schäden bis hin zur vollständigen Zerstörung auftreten, welche u. U. auch Personenschäden nach sich ziehen können. Als Folge kann ggf. die von dem Kraftwerk bereitgestellte Energie nicht mehr abgenommen werden, was wiederum beispielsweise in einem Kernkraftwerk zu einem unerwünschten unsicheren Betriebszustand führen kann. Demzufolge ist es erwünscht, eine derartige Turbinenwelle mit mindestens drei voneinander unabhängigen, d. h. redundant messenden Sensoren zu überwachen, von denen maximal einer ausfallen darf (2 von 3 Auswahlschaltung), um die Betriebssicherheit weiterhin zu gewährleisten. Selbstverständlich darf die Funktion der beiden verbliebenen Sensoren durch den Ausfall eines Sensors nicht beeinträchtigt werden.

Besondere Anforderungen an die Messtechnik ergeben sich in sicherheitskritischen Umgebungen oder solchen mit widrigen Umgebungsbedingungen, also etwa unter hohen Temperaturen, in chemisch aggressiver Atmosphäre oder in explosionsgeschützten Bereichen. Anforderungen an die zu verwendenden Messverfahren und -einrichtungen sind beispielsweise in den Normen API 670 oder DIN ISO 10817-1 beschrieben.

Beim Einsatz von Wirbelstromsensoren an rotierenden Wellen werden diese abhängig vom Messbereich z. B. mit einem Abstand von 1,5 bis 2,5 mm von der Welle platziert und sind als Abstandssensoren ausgeführt, d. h. eine Veränderung der Lage der Welle relativ zum Sensor wird von diesem in Form einer Impedanzänderung registriert, aus deren zeitlichem Verlauf dann der Schwingungszustand der überwachten Welle bestimmt werden kann.

Werden nun mehrere Wirbelstromsensoren zur Überwachung einer Welle eingesetzt, so müssen diese zueinander einen gewissen Mindestabstand aufweisen, damit durch die von jedem Sensor erzeugten Magnetfelder keine gegenseitige Beeinflussung der Sensoren entsteht. Dadurch ergibt sich aber ein erhöhter Platzbedarf und/oder konstruktiver Aufwand für eine Sensoranordnung, die den heutigen Sicherheitsanforderungen genügt. Dabei sind insbesondere die knappen räumlichen Verhältnisse an den Messobjekten zu berücksichtigen, was insbesondere bei der Nachrüstung bestehender Anlagen problematisch sein kann. Weiterhin wäre es wünschenswert, handelsübliche Einzelsensoren verwenden zu können.

Weiterhin betrachten üblicherweise die Sensoren unterschiedliche Messpunkte beispielsweise auf einer zu überwachenden Welle. Es ist nicht möglich, eine redundante Überwachung, z. B. in Form einer 2-von-3-Auswahlschaltung für einen bestimmten Wellenmesspunkt zu realisieren.

Es stellt sich also die Aufgabe, eine Möglichkeit zur Schwingungs-, Abstands- und/oder Drehzahlmessung an rotierenden Bauelementen mittels Wirbelstromsensoren vorzusehen, die den heutigen Sicherheitsanforderungen genügt und gleichzeitig einen möglichst geringen Bauraum und hohe Flexibilität ermöglicht.

Diese Aufgabe wird bei einer Wirbelstromsensoranordnung der eingangs genannten Art dadurch gelöst, dass die Einzelsensoren in unmittelbarer Nähe zueinander angeordnet sind und zu einer gemeinsamen Messseite hin ausgerichtet sind, um einen gemeinsamen zusammenhängenden räumlichen Messbereich zu überwachen, wobei zwischen den Einzelsensoren jeweils eine Abschirmung aus einem elektrisch leitfähigen Material angebracht ist, und wobei ferner jedem Einzelsensor eine Konverterschaltung zugeordnet ist, die dazu eingerichtet ist, die von dem jeweiligen Einzelsensor empfangenen Messsignale separat weiter zu verarbeiten, wobei die Konverterschaltungen dazu eingerichtet sind, Betriebsfrequenzen der Einzelsensoren einzustellen und die Betriebsfrequenzen der Einzelsensoren gegeneinander zu verstimmen.

Die vorgesehene Abschirmung aus elektrisch leitfähigem Material verringert das Übersprechen zwischen den benachbarten Sensoren, da das von diesen erzeugte Magnetfeld in der Abschirmung wiederum Wirbelströme und damit ein kompensatorisches Magnetfeld erzeugt. So wird es ermöglicht, zwei oder mehr Sensoren, im bevorzugten Fall drei Sensoren wie oben ausgeführt, auf engem Raum zu kombinieren und gleichzeitig deren Messsignale weitestgehend voneinander unabhängig zu halten. Hiervon wird gemäß der vorliegenden Erfindung Gebrauch gemacht, indem die Einzelsensoren redundant betrieben werden. Auch ein Ausfall eines Sensors, durch den dessen Magnetfeld entfallen würde, würde die Funktion der anderen Sensoren nicht maßgeblich beeinträchtigen, anders als wenn beispielsweise die Sensoren ohne Abschirmung nahe beieinander angeordnet wären und der gegenseitige Einfluss der jeweiligen Magnetfelder in einem späteren Verarbeitungsschritt herausgerechnet würde. Dabei wird jedem Einzelsensor eine Konverterschaltung zugeordnet, die eingerichtet ist, die von dem jeweiligen Einzelsensor empfangenen Messsignale weiter zu verarbeiten. Hier kann in üblicher Weise ein geeigneter, vorzugsweise digitaler, Messverstärker eingesetzt werden.

Wie erwähnt, sind die Konverterschaltungen dazu eingerichtet, Betriebsfrequenzen der Einzelsensoren einzustellen und die Betriebsfrequenzen der Einzelsensoren gegeneinander zu verstimmen. Mit dieser Maßnahme kann die gegenseitige Beeinflussung der Sensoren noch weiter verringert werden. Durch die gezielte Verstimmung der jeweiligen Messketten gegeneinander wird jeder Sensor zusammen mit seinem zugeordneten Messverstärker Signale in einem anderen Frequenzbereich verarbeiten und somit für evtl. trotz vorhandener Abschirmung immer noch vorhandenes Übersprechen weit weniger empfindlich sein.

Die erfindungsgemäße Forderung, dass die Einzelsensoren in unmittelbarer Nähe zueinander angeordnet werden sollen, bedeutet dabei, dass diese so nah wie möglich beieinander anzuordnen sind, also möglichst wenig Zwischenraum zwischen den Sensoren verbleibt. Es ist allerdings darauf zu achten, dass immer noch eine hinreichende Abschirmung zwischen den Einzelsensoren möglich ist. Wenn die Sensoren beispielsweise mit einem Gewinde ausgestattet sind, mit dem sie in einen Halter eingeschraubt werden, so wird darauf zu achten sein, dass keine Gewindeüberschneidung stattfindet, um eine sichere Befestigung der Einzelsensoren zu ermöglichen. Die Sensoren haben üblicherweise zylindrische Konturen mit einem Querschnittsradius r. Es hat sich als günstig herausgestellt, die Sensoren wenigstens so nahe beieinander anzuordnen, dass der lichte Abstand zwischen nebeneinander liegenden Sensoren an der engsten Stelle kleiner als r ist. Wenn die Einzelsensoren beispielsweise einen Ferritkern aufweisen, kann auch vorgesehen sein, den Abstand i. W. entsprechend dem Durchmesser des Ferritkerns oder kleiner zu wählen, um die Anforderung der Anordnung in unmittelbarer Nähe zueinander zu erfüllen.

Gemäß einer bevorzugten Ausführungsform der Wirbelstromsensoranordnung sind die Längsachsen der Einzelsensoren nicht parallel zueinander. Die Längsachsen der Einzelsensoren sind dabei beispielsweise durch die Längsachsen der in ihnen verwendeten Spulen definiert.

Insbesondere bei Messungen an einer rotierenden Welle ist es wünschenswert, dass die Messbereiche der Einzelsensoren sich möglichst gut überlappen, also sozusagen im Wesentlichen einen gemeinsamen "Fokus", d.h. einen gemeinsam überwachten Messbereich aufweisen. Dies kann aufgrund der Abmessungen der Einzelsensoren insbesondere bei geringeren Wellendurchmessern nicht unbedingt gewährleistet werden. Wenn hingegen die Längsachsen der Einzelsensoren nicht parallel zueinander stehen, sondern einen geringen Winkel im Bereich von beispielsweise 0,3 bis 10 Grad, insbesondere etwa 0,5 Grad, zueinander aufweisen, kann eine bessere Überlagerung der einzelnen Messbereiche zu einem zusammenhängenden gemeinsamen räumlichen Messbereich gewährleistet werden. Der vorzusehende Winkel kann dabei insbesondere abhängig vom Abstand der Sensoranordnung von dem Messobjekt und von dessen Abmessungen, also bei einer Welle beispielsweise von deren Durchmesser, eingestellt werden. Dabei kann der gedachte Schnittpunkt der Längsachsen der Sensoren ("Fokus") beispielsweise so gewählt werden, dass er auf dem Umfang der Welle oder auch im Zentrum der Welle, d. h. auf ihrer Längsachse zu liegen kommt.

Eine exakte Anpassung des Winkels an den jeweiligen Wellendurchmesser wird nicht in allen Fällen möglich oder erforderlich sein. Um eine Herstellung und Lagerhaltung wirtschaftlich zu gestalten, kann beispielsweise ein Satz von Wirbelstromsensoranordnungen mit einer Reihe fester Winkel vorgehalten werden, die jeweils für einen bestimmten Durchmesserbereich geeignet sind. Wesentlich ist in jedem Fall, dass durch die Neigung der Sensoren zueinander eine bessere Überlappung der Messbereiche gegenüber einer parallelen Anordnung möglich ist.

Die Abschirmung kann dabei aus einem metallisch leitenden Material, in bevorzugter Weise insbesondere aus Kupfer bestehen. Aufgrund seiner elektrischen und magnetischen Eigenschaften eignet sich Kupfer besonders gut als Material für die hier vorgesehene Abschirmung. Es können aber auch stattdessen andere leitfähige Materialien, beispielsweise leitfähige Polymere oder Kunststoffe, metallisierte oder graphitierte Kunststoffe oder Keramiken oder auch leitfähige ferromagnetische Materialien verwendet werden.

Erfindungsgemäß bevorzugt ist eine Wirbelstromsensoranordnung, bei der die Einzelsensoren in einem gemeinsamen, möglichst kleinen Gehäuse angeordnet sind. Dadurch kann eine kompakte Bauweise mit geringstmöglichem Platzbedarf erzielt werden.

Vorzugsweise kann das Gehäuse dabei einen Geberhalter und einen Kern umfassen, wobei der Kern Ausnehmungen zur Aufnahme der Einzelsensoren enthält und die Abschirmung durch den Kern gebildet wird. Dies kann beispielsweise so realisiert werden, dass der Kern aus einem elektrisch leitfähigen Vollmaterial besteht, in das Bohrungen oder Aussparungen zur Aufnahme der Einzelsensoren eingebracht werden. Natürlich kann der Kern auch aus mehreren entsprechend ausgeformten Einzelteilen bestehen. Der Kern kann jedes der oben erwähnten zur Abschirmung geeigneten Materialien enthalten, ist aber vorzugsweise wiederum aus Kupfer gefertigt. In ähnlicher Weise kann der Geberhalter aus einem elektrisch leitfähigen und/ oder ferromagnetischen Material bestehen. Der Geberhalter hat dabei sowohl die Funktion, zumindest eine gewisse Abschirmwirkung zur Umgebung zur Verfügung zu stellen als auch insbesondere eine mechanische Schutzfunktion, um die Einzelsensoren vor äußeren Einflüssen wie Stößen oder aggressiven Materialien zu schützen. Daher kann der Geberhalter vorzugsweise aus Edelstahl gefertigt werden.

Weiterhin können die Konverterschaltungen eingerichtet sein, die von den Einzelsensoren empfangenen Messsignale zu linearisieren. Dies kann in üblicher, dem Fachmann bekannter Weise geschehen.

Besonders vorteilhaft ist es, wenn die Konverterschaltungen der Einzelsensoren in einem gemeinsamen Gehäuse angeordnet sind. Auch mit dieser Maßnahme kann wiederum der Platzbedarf minimiert werden und können Wartungsarbeiten vereinfacht werden. Insbesondere wenn auch die Einzelsensoren in einem gemeinsamen Gehäuse angeordnet sind, kann dann eine einzige gemeinsame Kabelführung zur Verbindung der Sensoren mit den jeweiligen Konverterschaltungen eingesetzt werden.

Weiterhin kann es vorgesehen sein, dass die Wirbelstromsensoranordnung über ein Interface zum Anschluss an einen Computer verfügt, über das Signale an den Computer gesendet und/oder von dem Computer empfangen werden können. Dieses Interface kann etwa in Form einer geeigneten Schnittstelle als Ausgang der Konverterschaltungen realisiert werden. Es können so insbesondere die Messsignale zur weiteren Verarbeitung, Auswertung oder Archivierung an ein Computersystem weitergeleitet werden. Ferner kann es vorgesehen sein, dass die Wirbelstromsensoranordnung über das Interface Betriebsparameter von dem Computer empfangen kann. So können z.B. über ein geeignetes Computerprogramm die oben genannten Betriebsfrequenzen oder andere Messparameter eingestellt werden. In diesem Fall sind auch die verwendeten Konverterschaltungen mit den entsprechenden Funktionalitäten auszustatten, so dass hier vorzugsweise digitale Konverterschaltungen (Messverstärker) zum Einsatz kommen können.

Weiterhin wird die Aufgabe der Erfindung bei einem Verfahren der eingangs genannten Art dadurch gelöst, dass eine erfindungsgemäße Wirbelstromsensoranordnung verwendet wird, bei der die Betriebsfrequenzen der Einzelsensoren gegeneinander verstimmt werden und die Einzelsensoren als redundante Sensoren ausgelegt werden. So können in einem entsprechenden Messverfahren die dargestellten Vorteile einer erfindungsgemäßen Wirbelstromsensoranordnung nutzbar gemacht werden.

Weiterhin können die Messsignale der Einzelsensoren linearisiert werden, um eine Weiterverarbeitung zu erleichtern.

Mit der vorstehend beschriebenen Wirbelstromsensoranordnung ist es also beispielsweise möglich, mit drei unabhängig voneinander arbeitenden Sensoren den quasi gleichen Messpunkt zu betrachten und dabei gleichzeitig eine sehr kompakte Bauweise zu ermöglichen. Es können handelsübliche Wirbelstromsensoren (z. B. nach API 670 oder DIN ISO 10817-1) eingesetzt werden. So wird es möglich, eine hohe Beständigkeit gegen raue mechanische und aggressive Umgebungsbedingungen sowie eine hohe Temperaturfestigkeit zu erzielen. Damit ist ein Einsatz für die redundante statische Erfassung der Wellenlage, die dynamische Messung von Wellenschwingungen oder Drehzahlmessungen an Großaggregaten möglich. Wirbelstromsensoranordnungen gemäß der Erfindung eignen sich aufgrund ihrer Abmessungen auch besonders für Nachrüstungen von sicherheitsgerichteten redundanten Messungen an älteren Aggregaten, wo oft nur ein sehr begrenzter Raum für die Realisierung der Messaufgabe zur Verfügung steht. Mit der Verwendung von zwei oder vorzugsweise drei handelsüblichen, unabhängig voneinander messenden Einzelsensoren, welche redundant quasi den gleichen Messpunkt auf einem Messobjekt, beispielsweise einer Welle, betrachten, kann eine sichere Überwachung auch von sicherheitskritischen Einrichtungen ermöglicht werden.

Im Folgenden wird die Erfindung anhand von Figuren näher erläutert.

Dabei zeigen:
- Fig. 1: eine Messkette für Wellenschwingungsmessungen mit einer erfindungsgemäßen Wirbelstromsensoranordnung,
- Fig. 2: einen Wirbelstromsensor zum Einsatz in der Sensoranordnung aus Fig. 1,
- Fig. 3: eine Schnittansicht eines Geberhalters zur Verwendung in der Messkette aus Fig. 1 und
- Fig. 4: eine Schnittansicht eines als Abschirmung dienenden Kerns zur zur Aufnahme der Wirbelstromsensoren.

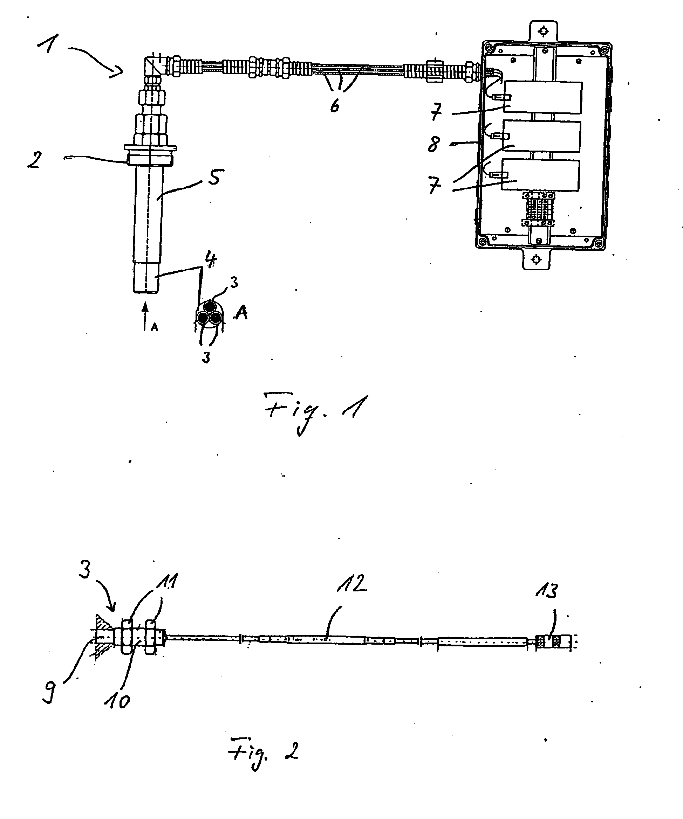

Fig. 1 zeigt ein Beispiel für eine erfindungsgemäße Messkette 1 für Wellenschwingungsmessungen umfassend eine Wirbelstromsensoranordnung, bei der in einem Geberhalter (Messkopf) 2 drei einzelne Wirbelstromsensoren 3 in einem Kern 4 aus leitfähigem Material eingebettet sind, wobei der Kern 4 in den Geberhalter 2 eingesetzt wird. Die Ansicht A zeigt in Draufsicht die Anordnung der Wirbelstromsensoren 3 im Kern 4. Der Kern 4 besteht dabei aus einem elektrisch leitfähigen Material, vorzugsweise Kupfer, und bewirkt somit eine gegenseitige Abschirmung der Wirbelstromsensoren 3 und verringert ein Übersprechen zwischen diesen. Zum mechanischen Schutz gegen äußere Einflüsse ist der Kern 4 im Geberhalter 2 eingebettet, der beispielsweise aus Edelstahl bestehen kann. Es wird üblicherweise vorgesehen sein, dass der Geberhalter 2 mit seinem mantelförmigen Gehäuse 5 den Kern 4 vollständig umgibt, natürlich mit Ausnahme der dem Messobjekt zugewandten Seite (Ansicht A), zu der hin die Wirbelstromsensoren 3 im Wesentlichen freiliegen sollten. Es kann aber auch vorgesehen sein, dass der Kern 4 mit den darin eingebetteten Wirbelstromsensoren 3 etwas über das Gehäuse 5 hinausragt. Neben dem mechanischen Schutz von Kern 4 und Wirbelstromsensoren 3 bietet der Geberhalter 2 bzw. dessen mantelförmiges Gehäuse 5 auch noch eine weitere Abschirmung der Wirbelstromsensoren 3 gegenüber der Umgebung und daraus evtl. einstreuenden Störsignalen und kann darüber hinaus auch eventuelle von den Sensoren in der Umgebung erzeugte Störungen verringern.

Die Wirbelstromsensoren 3 sind über drei gleichartige, gebündelte Messkabel 6 mit ihren jeweiligen Messverstärkern 7 verbunden, die in einem gemeinsamen Gehäuse 8 angeordnet sind. Die Messverstärker 7 dienen zur Ansteuerung der Wirbelstromsensoren 3 und zur Aufbereitung deren Signale und sind vorzugsweise als digitale Messverstärker ausgebildet. Insbesondere können die Betriebsfrequenzen der Wirbelstromsensoren 3 gezielt verändert werden, etwa durch den Einsatz veränderlicher Kapazitäten in den Messverstärkern 7, wodurch sich zusammen mit den in den Wirbelstromsensoren befindlichen Spulen eine einstellbare Frequenzcharakteristik ergibt. Geeignete Messverstärker 7 können etwa aus der UNICON-Serie der Konrad Mess- und Regeltechnik GmbH entnommen werden.

Mit der gezeigten Wirbelstromsensoranordnung 1 kann also ein höchst kompakter und robuster Geberhalter (Messkopf) 2 aufgebaut werden, der drei gegeneinander abgeschirmte, sich gegenseitig nur wenig oder gar nicht beeinflussende Wirbelstromsensoren 3 enthält und in vielfältiger Weise für Messaufgaben, insbesondere für die Schwingungsmessung an rotierenden Bauelementen wie Turbinenwellen eingesetzt werden kann. Natürlich können analog zu dem gezeigten Prinzip auch je nach Bedarf mehr als drei Wirbelstromsensoren 3 in einem Geberhalter 2 integriert werden. Auch bei einer Zusammenfassung von beispielsweise fünf oder sieben oder auch mehr Wirbelstromsensoren 3 in einem Geberhalter 2 kann durch die gegenseitige Abschirmung in Form des Kerns 4 ein störungsfreier Betrieb ermöglicht werden.

In jedem Fall kann durch eine zusätzliche Verstimmung der Betriebsfrequenzen der Wirbelstromsensoren 3 gegeneinander eine weitere Verbesserung der Signalqualität erzielt werden. Versuche der Anmelderin mit einer Messkette zur Wellenschwingungsmessung, wie in Fig. 1 gezeigt, haben ergeben, dass sich bei einer geeigneten Verstimmung der Betriebsfrequenzen und einer gegenseitigen Abschirmung durch einen Kupferkern 4 keine messtechnisch bedeutsame wechselseitige Beeinflussung der Wirbelstromsensoren 3 mehr ergibt und eine ausgezeichnete Signalqualität erzielt werden kann. Im Gegensatz dazu zeigten sich bei einer Anordnung wie der dargestellten ohne Abschirmung durch den Kupferkern 4 starke gegenseitige Beeinflussungen der Sensorsignale, die die Messergebnisse stark beeinträchtigen.

Fig. 2 zeigt einen in einer Wirbelstromsensoranordnung nach Fig. 1 einsetzbaren Wirbelstromsensor 3. Dieser besteht aus dem eigentlichen Sensorelement 9, welches die nicht dargestellte Messspule und ggf. eine weitere, separate Erregerspule enthält und das mit seinem hinteren Teil in einem Gehäuseelement 10 gefasst ist. Dieses Gehäuseelement 10 ist auf seiner Außenseite mit einem Gewinde versehen, auf dem in der gezeigten Darstellung zwei Muttern 11 aufgeschraubt sind, mittels derer das Gehäuseelement 10 in einer geeigneten Fassung, Bohrung oder dgl. fixiert werden kann. Bei einer Wirbelstromsensoranordnung, wie in Fig. 1 gezeigt, können aber auch die für die Aufnahme der Wirbelstromsensoren 3 vorgesehenen Ausnehmungen im Kern 4 ihrerseits mit einem Innengewinde ausgestattet sein, in das das Gewinde des Gehäuseelements 10 eingedreht werden kann. Aus dem dem Sensorelement 9 gegenüberliegenden Ende des Gehäuseelements 10 tritt das Messkabel 12 aus, das wiederum an seinem anderen Ende mit einem geeigneten Stecker 13 zum Anschluss an einen Messverstärker 7 (Fig. 1) versehen ist. Wirbelstromsensoren dieser Art finden sich beispielsweise in der EC 6423-Serie der Konrad Mess- und Regeltechnik GmbH.

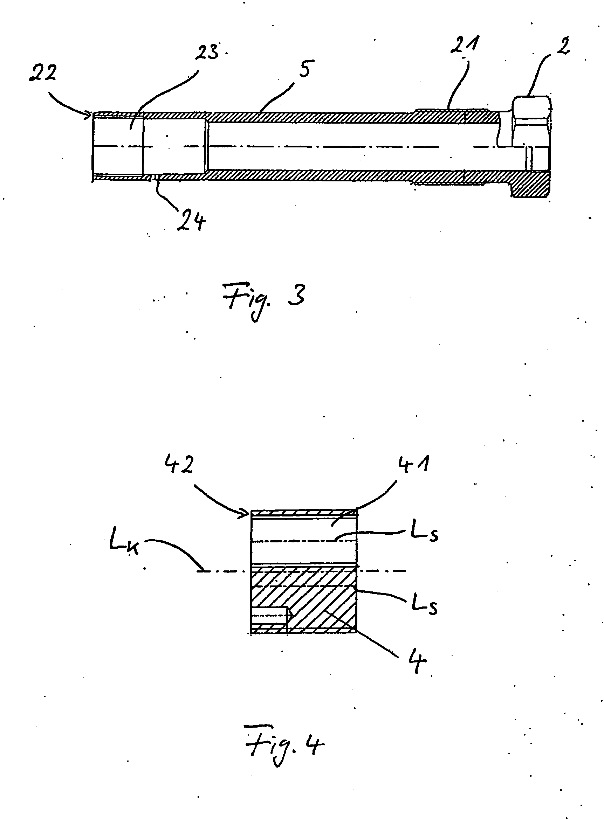

Fig. 3 zeigt eine Schnittansicht eines Geberhalters 2, wie er in der in Fig. 1 dargestellten Messkette 1 verwendet werden kann. Der Geberhalter 2 ist mit einem Gewinde 21 ausgestattet, mit dem er in eine Halterung, einen Aufnahmeadapter o. Ä. eingeschraubt werden kann. Das mantelförmige Gehäuse 5 des Geberhalters 2 ist im Wesentlichen als Hohlzylinder ausgebildet, um in seinem Inneren die (nicht dargestellten) Einzelsensoren 3 aufzunehmen und deren Messkabel 12 hindurchzuführen. Dabei ist insbesondere am vorderen Ende 22 des Geberhalters 2 bzw. des Gehäuses 5 ein Hohlraum 23 mit vergrößertem Durchmesser vorgesehen, der zur Aufnahme eines (nicht dargestellten) Kerns 4 mit darin eingebetteten Einzelsensoren 3 geeignet ist. Hier kann beispielsweise auch in der Außenwandung des Geberhalters 2 bzw. des Gehäuses 5 ein Gewinde 24 zur Aufnahme einer Madenschraube zur Fixierung eines Kerns 4 im Geberhalter 2 vorgesehen sein. Dabei wird ein Kern 4 vorzugsweise so weit in den Hohlraum 23 eingeführt, dass er vollständig im Geberhalter 2 bzw. im Gehäuse 5 eingebettet ist, d. h. dass die jeweiligen Stirnflächen planparallel zueinander sind (vgl. Ansicht A in Fig. 1).

Um eine Abschirmung zum Außenraum hin und eine möglichst große Widerstandsfähigkeit gegenüber mechanischen, chemischen oder sonstigen Belastungen zu bieten, ist der Geberhalter 2 vorzugsweise aus Edelstahl oder einem ähnlich widerstandsfähigen Material gefertigt.

Fig. 4 zeigt eine Schnittansicht eines Kerns 4, wie er für eine Wirbelstromsensoranordnung aus Fig. 1 verwendet werden kann und der beispielsweise in einen Hohlraum 23 eines Geberhalters 2 aus Fig. 3 eingesetzt werden kann. Der Kern 4 weist dabei Bohrungen 41 zur Aufnahme der (nicht dargestellten) Einzelsensoren 3 auf, die beispielsweise auch mit einem Gewinde zur Befestigung der Einzelsensoren 3 versehen sein können. Je nach vorgesehener Messaufgabe und Sicherheitsanforderungen kann der Kern 4 eine unterschiedliche Anzahl von Einzelsensoren 3 aufnehmen und verfügt über entsprechend viele Bohrungen 41. Im hier gezeigten Beispiel hat der Kern 4 eine zylindrische Form und weist drei Bohrungen 41 mit einem Winkelversatz von jeweils 120° zueinander auf (vgl. Ansicht A aus Fig. 1). Der Kern 4 ist aus einem elektrisch leitfähigen Material, beispielsweise Kupfer, oder aus einem ferromagnetischen Material hergestellt, um die vorgesehene Abschirmwirkung der in den Bohrungen 41 aufgenommenen Einzelsensoren 3 zueinander zu gewährleisten.

In einer Variante des dargestellten Kerns 4 kann es vorgesehen sein, dass die Längsachsen L_{S} der einzelnen Bohrungen 41 nicht parallel zur Längsachse L_{K} des Kerns 4 angeordnet sind, sondern eine gewisse Neigung zu dieser aufweisen. Diese Neigung ist vorzugsweise, aber nicht zwingend, für alle im Kern vorgesehenen Bohrungen 41 gleich und derart ausgestaltet, dass die Längsachsen Ls der Bohrungen 41 an der vorderen Stirnfläche 42 des Kerns 4 den geringsten gegenseitigen Abstand zueinander aufweisen. Es ergibt sich dann in einem gewissen Abstand vor der Stirnfläche 42 des Kerns 4 vorzugsweise ein gemeinsamer Schnittpunkt (Fokus) aller Längsachsen Ls der Bohrungen 41 mit der Längsachse L_{K} des Kerns 4. Mit dieser Ausgestaltung kann gewährleistet werden, dass die Messbereiche der in den Bohrungen 41 aufgenommenen Einzelsensoren 3 sich möglichst gut überlappen, um eine redundante Messung eines einzigen Messpunkts auf einem Messobjekt, z. B. einer rotierenden Welle, zu ermöglichen.

Da die vorderen Austrittsflächen der Einzelsensoren 3 ein möglichst freies Sichtfeld haben sollten, ist die Stirnfläche 42 des Kerns 4 entsprechend auszugestalten, um in der Umgebung der Einzelsensoren 3 möglichst plan mit deren vorderen Oberflächen zu liegen. Demgemäß kann die vordere Stirnfläche 42 des Kerns 4 beispielsweise sphärisch eingesenkt werden.

Es können natürlich anstelle der genannten Wirbelstromsensoren und Messverstärker beliebige für Messaufgaben der eingangs genannten Art geeignete Wirbelstromsensoren und Messverstärker eingesetzt werden. Ebenso sind Variationen der anhand der Figuren dargestellten Messkette und Wirbelstromsensoranordnung denkbar, etwa indem die Messverstärker oder Teile davon mit in den Geberhalter verlagert werden oder die Sensoren direkt an eine geeignete PC-Messkarte angeschlossen werden.

Im gezeigten Ausführungsbeispiel sind die Sensoren in einer 120 Grad Versatz-Winkelanordnung im Kreis angeordnet. In einer alternativen Ausführungsform ist eine Reihenanordnung der Sensoren vorgesehen, in der die Sensoren nebeneinander auf einer gemeinsamen Linie liegen. Weitere zweckmäßige Anordnungen sind in das Belieben des Fachmanns gestellt.

## Patentansprüche

1. Wirbelstromsensoranordnung (1) zur Schwingungs-, Abstands- und/ oder Drehzahlmessung an rotierenden Bauelementen, insbesondere Turbinenwellen, umfassend mindestens zwei Einzelsensoren (3),
die in unmittelbarer Nähe zueinander angeordnet sind und zu einer gemeinsamen Messseite hin ausgerichtet sind, um einen gemeinsamen zusammenhängenden räumlichen Messbereich zu überwachen, wobei zwischen den Einzelsensoren (3) jeweils eine Abschirmung (4) aus einem elektrisch leitfähigen Material angebracht ist,
wobei ferner
jedem Einzelsensor (3) eine Konverterschaltung (7) zugeordnet ist, die dazu eingerichtet ist, die von dem jeweiligen Einzelsensor (3) empfangenen Messsignale separat weiter zu verarbeiten, wobei die Konverterschaltungen (7) dazu eingerichtet sind, Betriebsfrequenzen der Einzelsensoren (3) einzustellen und die Betriebsfrequenzen der Einzelsensoren (3) gegeneinander zu verstimmen.

2. Wirbelstromsensoranordnung (1) nach Anspruch 1, **dadurch gekennzeichnet, dass** die Längsachsen der Einzelsensoren nicht parallel zueinander sind.

3. Wirbelstromsensoranordnung (1) nach einem der vorhergehenden Ansprüche, **dadurch gekennzeichnet, dass** die Anordnung drei Einzelsensoren (3) umfasst.

4. Wirbelstromsensoranordnung (1) nach einem der vorhergehenden Ansprüche, **dadurch gekennzeichnet, dass** die Abschirmung (4) aus einem metallisch leitenden Material besteht.

5. Wirbelstromsensoranordnung (1) nach Anspruch 4, **dadurch gekennzeichnet, dass** die Abschirmung (4) aus Kupfer besteht.

6. Wirbelstromsensoranordnung (1) nach einem der Ansprüche 1 bis 4, **dadurch gekennzeichnet, dass** die Abschirmung (4) aus einem ferromagnetischen Material besteht.

7. Wirbelstromsensoranordnung (1) nach einem der vorhergehenden Ansprüche, **dadurch gekennzeichnet, dass** die Einzelsensoren (3) in einem gemeinsamen Geberhalter (2) angeordnet sind.

8. Wirbelstromsensoranordnung (1) nach Anspruch 7, **dadurch gekennzeichnet, dass** der Geberhalter (2) einen Kern (4) umfasst, wobei der Kern (4) Ausnehmungen zur Aufnahme der Einzelsensoren (3) enthält und die Abschirmung (4) durch den Kern (4) gebildet wird.

9. Wirbelstromsensoranordnung (1) nach Anspruch 7 oder 8, **dadurch gekennzeichnet, dass** der Geberhalter (2) aus einem elektrisch leitfähigen und/oder ferromagnetischen Material besteht.

10. Wirbelstromsensoranordnung (1) nach einem der vorhergehenden Ansprüche, **dadurch gekennzeichnet, dass** die Konverterschaltungen (7) eingerichtet sind, die von den Einzelsensoren (3) empfangenen Messsignale zu linearisieren.

11. Wirbelstromsensoranordnung (1) nach einem der vorhergehenden Ansprüche, **dadurch gekennzeichnet, dass** die Konverterschaltungen (7) der Einzelsensoren (3) in einem gemeinsamen Gehäuse (8) angeordnet sind.

12. Wirbelstromsensoranordnung (1) nach einem der vorhergehenden Ansprüche, **gekennzeichnet durch** ein Interface zum Anschluss an einen Computer, wobei über das Interface Signale an den Computer gesendet und/oder von dem Computer empfangen werden können.

13. Wirbelstromsensoranordnung (1) nach Anspruch 12, **dadurch gekennzeichnet, dass** die Anordnung eingerichtet ist, über das Interface Betriebsparameter von dem Computer zu empfangen.

14. Verfahren zur Schwingungs-, Abstands- und Drehzahlmessung an rotierenden Bauelementen, insbesondere Turbinenwellen, **gekennzeichnet durch** die Verwendung einer Wirbelstromsensoranordnung (1) nach einem der vorhergehenden Ansprüche, wobei die Einzelsensoren (3) als redundante Sensoren ausgelegt sind und die Betriebsfrequenzen der Einzelsensoren (3) gegeneinander verstimmt werden.

15. Verfahren nach Anspruch 14, **dadurch gekennzeichnet, dass** die Messsignale der Einzelsensoren (3) linearisiert werden.

## Claims

1. Eddy current sensor arrangement (1) for measuring the vibration, spacing and/or speeds of rotating components, in particular turbine shafts, comprising at least two individual sensors (3) which are arranged in close proximity to each other and are oriented towards a common measuring side for monitoring a common, continuous, three-dimensional measuring range, wherein a shielding (4) made of an electrically conductive material is attached between each of the individual sensors (3), wherein in addition, a converter circuit (7) is assigned to each individual sensor (3), which circuit is configured to separately further process the measuring signals received from each individual sensor (3), and wherein the converter circuits (7) are configured to adjust operating frequencies of the individual sensors (3) and to detune the operating frequencies of the individual sensors (3) relative to each other.

2. Eddy current sensor arrangement (1) according to claim 1, **characterised in that** the longitudinal axes of the individual sensors are not mutually parallel.

3. Eddy current sensor arrangement (1) according to any of the preceding claims, **characterised in that** the arrangement comprises three individual sensors (3).

4. Eddy current sensor arrangement (1) according to any of the preceding claims, **characterised in that** the shielding (4) consists of a metallically conductive material.

5. Eddy current sensor arrangement (1) according to claim 4, **characterised in that** the shielding (4) consists of copper.

6. Eddy current sensor arrangement (1) according to any of claims 1 to 4, **characterised in that** the shielding (4) consists of a ferromagnetic material.

7. Eddy current sensor arrangement (1) according to any of the preceding claims, **characterised in that** the individual sensors (3) are arranged in a common sensor holder (2).

8. Eddy current sensor arrangement (1) according to claim 7, **characterised in that** the sensor holder (2) comprises a core (4), said core (4) containing recesses for receiving the individual sensors (3) and the shielding (4) being formed by the core (4).

9. Eddy current sensor arrangement (1) according to either claim 7 or claim 8, **characterised in that** the sensor holder (2) consists of an electrically conductive and/or ferromagnetic material.

10. Eddy current sensor arrangement (1) according to any of the preceding claims, **characterised in that** the converter circuits (7) are configured to linearise the measuring signals received from the individual sensors (3).

11. Eddy current sensor arrangement (1) according to any of the preceding claims, **characterised in that** the converter circuits (7) of the individual sensors (3) are arranged in a common housing (8).

12. Eddy current sensor arrangement (1) according to any of the preceding claims, **characterised by** an interface for connecting to a computer, signals being able to be sent to the computer and/or received from the computer via the interface.

13. Eddy current sensor arrangement (1) according to claim 12, **characterised in that** the arrangement is configured to receive operating parameters from the computer via the interface.

14. Method for measuring the vibration, spacing and speeds of rotating components, in particular turbine shafts, **characterised by** the use of an eddy current sensor arrangement (1) according to any of the preceding claims, the individual sensors (3) being designed as redundant sensors and the operating frequencies of the individual sensors (3) being detuned relative to each other.

15. Method according to claim 14, **characterised in that** the measuring signals of the individual sensors (3) are linearised.

## Revendications

1. Agencement de capteurs à courants de Foucault (1) pour la mesure de vibration, de distance et/ou de vitesse de rotation sur des composants rotatifs, en particulier des arbres de turbine, comprenant au moins deux capteurs individuels (3), qui sont disposés à proximité immédiate l'un de l'autre et qui sont orientés vers un côté de mesure commun, pour surveiller une zone de mesure spatiale continue commune, dans lequel un écran (4) en matériau électriquement conducteur est chaque fois installé entre les capteurs individuels (3), dans lequel en outre un circuit de convertisseur (7) est associé à chaque capteur individuel (3), ce circuit étant conçu de façon à traiter séparément les signaux de mesure reçus du capteur individuel respectif (3), dans lequel les circuits de convertisseur (7) sont conçus de façon à régler les fréquences de fonctionnement des capteurs individuels (3) et pour accorder entre elles les fréquences de fonctionnement des capteurs individuels (3).

2. Agencement de capteurs à courants de Foucault (1) selon la revendication 1, **caractérisé en ce que** les axes longitudinaux des capteurs individuels ne sont pas parallèles l'un à l'autre.

3. Agencement de capteurs à courants de Foucault (1) selon l'une quelconque des revendications précédentes, **caractérisé en ce que** l'agencement comprend trois capteurs individuels (3).

4. Agencement de capteurs à courants de Foucault (1) selon l'une quelconque des revendications précédentes, **caractérisé en ce que** l'écran (4) est constitué d'un matériau conducteur métallique.

5. Agencement de capteurs à courants de Foucault (1) selon la revendication 4, **caractérisé en ce que** l'écran (4) est constitué de cuivre.

6. Agencement de capteurs à courants de Foucault (1) selon l'une quelconque des revendications 1 à 4, **caractérisé en ce que** l'écran (4) est constitué d'un matériau ferromagnétique.

7. Agencement de capteurs à courants de Foucault (1) selon l'une quelconque des revendications précédentes, **caractérisé en ce que** les capteurs individuels (3) sont disposés dans un support de capteurs commun (2).

8. Agencement de capteurs à courants de Foucault (1) selon la revendication 7, **caractérisé en ce que** le support de capteurs (2) comprend un noyau (4), dans lequel le noyau (4) comporte des évidements pour le logement des capteurs individuels (3) et l'écran (4) est formé par le noyau (4).

9. Agencement de capteurs à courants de Foucault (1) selon la revendication 7 ou 8, **caractérisé en ce que** le support de capteurs (2) est constitué d'un matériau électriquement conducteur et/ou ferromagnétique.

10. Agencement de capteurs à courants de Foucault (1) selon l'une quelconque des revendications précédentes, **caractérisé en ce que** les circuits de convertisseur (7) sont conçus de façon à linéariser les signaux de mesure reçus des capteurs individuels (3).

11. Agencement de capteurs à courants de Foucault (1) selon l'une quelconque des revendications précédentes, **caractérisé en ce que** les circuits de convertisseur (7) des capteurs individuels (3) sont disposés dans un boîtier commun (8).

12. Agencement de capteurs à courants de Foucault (1) selon l'une quelconque des revendications précédentes, **caractérisé par** une interface pour le raccordement à un ordinateur, dans lequel des signaux peuvent être envoyés à l'ordinateur et/ou reçus de l'ordinateur par l'intermédiaire de l'interface.

13. Agencement de capteurs à courants de Foucault (1) selon la revendication 12, **caractérisé en ce que** l'agencement est conçu de façon à recevoir des paramètres de fonctionnement à partir de l'ordinateur par l'intermédiaire de l'interface.

14. Procédé de mesure de vibration, de distance et de vitesse de rotation sur des composants rotatifs, en particulier des arbres de turbine, **caractérisé par** l'utilisation d'un agencement de capteurs à courants de Foucault (1) selon l'une quelconque des revendications précédentes, dans lequel les capteurs individuels (3) sont conçus comme des capteurs redondants et les fréquences de fonctionnement des capteurs individuels (3) sont accordées entre elles.

15. Procédé selon la revendication 14, **caractérisé en ce que** les signaux de mesure des capteurs individuels (3) sont linéarisés.
